# EUROPÄISCHE PATENTSCHRIFT

(11) **EP 0 516 960 B1**
(45) Veröffentlichungstag und Bekanntmachung des Hinweises auf die Patenterteilung: **01.03.1995**
(21) Anmeldenummer: 92106836.7
(22) Anmeldetag: 22.04.1992
(51) Int. Cl.: H02G 1/00

(54) **Vorrichtung zum Trennen von Tragseilkabeln**
Apparatus for separating a supporting cable
Dispositif pour séparer un câble porteur

(30) Priorität: 01.06.1991 DE 4118089
(43) Veröffentlichungstag der Anmeldung: 09.12.1992
(73) Patentinhaber: Walter Rose GmbH & Co. KG, D-58099 Hagen (DE)
(72) Erfinder: Penz, Heinz, W-5800 Hagen (DE); Feiler, Gerhard, W-5800 Hagen 1 (DE); Forte, Jörg, W-5860 Iserlohn (DE)
(74) Vertreter: Patentanwälte Meinke, Dabringhaus und Partner

(56) Entgegenhaltungen:
- US-A- 4 276 798
- US-A- 4 408 508

## Beschreibung

Die Erfindung betrifft eine Vorrichtung zum Trennen von Kabeln gemäß dem Oberbegriff des Anspruchs 1. Eine derartige Vorrichtung ist aus der Patentschrift US-A-4276798 bekannt.

Tragseilkabel werden insbesondere als Überlandleitungen eingesetzt, d.h. immer dann, wenn eine Erdverlegung von Kabeln nicht möglich bzw. nicht gewünscht ist. Dabei wird die Traglast des Tragseilkabels von dem Tragseil aufgenommen, während das z.B. elektrisch leitende Kabel die elektrische Verbindung übernimmt und durch einen gemeinsamen Kabelmantel am Tragseil gehalten ist.

In manchen Einsatzfällen, insbesondere an den Anschlußstellen des Tragseilkabels, ist es erforderlich, das elektrisch leitende Kabel vom Tragseil zu trennen, d.h. entsprechend den gemeinsamen Kabelmantel im Bereich zwischen elektrisch leitendem Kabel und Tragseil aufzuschneiden. Dieses Auftrennen wird vom Bedienungspersonal derzeit von Hand mit einem Schneidmesser oder dgl. vorgenommen, wobei es leicht dazu kommen kann, daß die Isolierung des elektrisch leitenden Kabels beschädigt wird. Eine einwandfreie Auftrennung ist daher von der Zuverlässigkeit des Bedienungspersonals abhängig, außerdem ist diese Art der Auftrennung auch umständlich.

Grundsätzlich sind eine Vielzahl von Kabelschneidern zum Aufschneiden von Kabelmänteln von Koaxialkabeln bekannt, einen solchen zeigt beispielsweise die DE 39 05 694 Cl der Anmelderin. Derartige Kabelschneider eignen sich jedoch nur zum Aufschneiden von Koaxialkabeln, bei denen es darauf ankommt, beim Abisolieren ein Verletzen von Innen- und Außenleiter des Koaxialkabels zu vermeiden. Diese Koaxialkabelmantelschneider sind jedoch für ein Trennen von Tragseilkabeln nicht geeignet.

Aufgabe der Erfindung ist die Schaffung einer Lösung, mit der derartige Tragseilkabel auf leicht handhabbare Weise zuverlässig ohne Verletzung des elektrisch leitenden Kabels aufgetrennt werden können.

Diese Aufgabe wird gemäß der Erfindung durch die Merkmale des Anspruchs 1 gelöst.

Mit dieser Vorrichtung ist es auf einfache Weise zuverlässig möglich, ein Tragseilkabel in das Tragseil und das elektrisch leitende Kabel zu zertrennen, ohne daß dabei die Kabelmantelisolierung des elektrisch leitenden Kabels beschädigt wird. Hierzu ist es lediglich erforderlich, das Tragseilkabel entweder mit der Tragseilseite oder mit der Kabelseite entsprechend in die Vorrichtung einzulegen, diese anschließend zu schließen und dann durch entsprechende Relativbewegung zwischen Schneidrad und Tragseilkabel die Trennung durchzuführen wobei durch die Drehbewegung des Schneidrades und gleichzeitige Abstützung des Tragseils auf der gegenüberliegenden Seite durch die Stützrolle der Trennvorgang erleichtert wird.

Das Schneidrad ist derart in dem einen Element gelagert ist, das die Lage seiner Schneidradwelle gegenüber der Schneidebene veränderbar. Das Tragseilkabel kann dann zunächst in die Vorrichtung eingelegt werden, worauf dann das Schneidrad in die Schneidposition bewegt wird. Gleichzeitig ist vor dem Herausnehmen des Tragseilkabels ein Herausschwenken des Schneidrades aus der Schneidposition möglich.

Dazu sieht die Erfindung vor, daß die Schneidradwelle exzentrisch in einer Lagerhülse angeordnet ist, die ihrerseits drehbar in dem einen Element gelagert ist, wobei an der Lagerhülse ein Schwenkhebel angeordnet ist. Durch entsprechende Verdrehung der Lagerhülse gegenüber dem betreffenden Vorrichtungselement läßt sich auf einfache Weise das Schneidrad aus der bzw. in die Schneidposition verschwenken.

Weiterhin sieht eine Weiterbildung der Erfindung vor, daß die Schneidradwelle das eine Vorrichtungselement vollständig durchdringt und daß am freien Ende der Schneidradwelle ein Drehknebel angeordnet ist. Durch Betätigung des Drehknebels kann dann die Vorrichtung entlang des zu trennenden Tragseilkabels bewegt und gleichzeitig das Tragseilkabel aufgeschnitten werden.

Um nicht von Hand den Anpreßdruck gewährleisten zu müssen, ist in Ausgestaltung vorgesehen, daß die beiden Vorrichtungselemente über ein Verschlußelement gegeneinander verrastbar sind.

Eine besonders vorteilhafte Ausgestaltung der Erfindung zeichnet sich dadurch aus, daß an der Unterseite des einen Vorrichtungselementes eine rinnenförmige Aussparung vorgesehen ist, in der schräg zu deren Längsrichtung ein in Längsrichtung geschlitztes Rohr angeordnet ist, dessen beide nach außen weisende Schnittkanten als Schneiden ausgebildet sind.

Nach dem Durchtrennen des Tragseilkabels kann dann auf einfache Weise eine Entgratung der Schnittkante des Kabelmantels des elektrisch leitenden Kabels vorgenommen werden, in dem das betreffende Kabel in Längsrichtung durch die rinnenförmige Aussparung gezogen wird. Dabei wird durch die Rohrform der Schneidkanten der Span seitlich von der Schnittstelle abgeführt und behindert nicht die Schneidarbeit.

Dabei ist es am zweckmäßigsten, wenn das geschlitzte Rohr unter einem Winkel von 30 - 45° zur Längsrichtung der rinnenförmigen Aussparung angeordnet ist.

Ferner ist zum Entgraten von mit einer erfindungsgemäßen Vorrichtung getrennten Tragseilkabeln, ein in Längsrichtung geschlitztes Rohr vorgesehen, dessen beide Schnittkanten als Schneiden ausgebildet sind, wobei das Rohr in einem getrennten rinnenförmigen Element, schräg zu dessen Längsrichtung angeordnet ist. Dabei ist das geschlitzte Rohr bevorzugt unter einem Winkel von 30 - 45 ° zur Längsrichtung des rinnenförmigen Elementes angeordnet.

Mit dieser getrennten Vorrichtung ist es ebenfalls möglich, die Oberfläche der Kabelmantelumhüllung eines getrennten Tragseilkabels oder auch eines anderen Kabels zu entgraten, wobei die Vorrichtung beidseitig verwendet werden kann, d.h. die entsprechend zu entgratende Kabelmantelfläche kann in beiden Richtungen durch das rinnenförmige Element gezogen werden.

Die Erfindung ist nachstehend anhand der Zeichnung beispielsweise näher erläutert. Diese zeigt in:
- Fig. 1: die räumliche Darstellung eines Ausführungsbeispieles der Erfindung,
- Fig. 2: in einem Querschnitt ein Tragseilkabel mit Tragseil und elektrisch leitendem Kabel,
- Fig. 3: eine Seitenansicht auf eine erfindungsgemäße Vorrichtung nach Fig. 1,
- Fig. 4: eine Frontansicht der Vorrichtung nach Fig. 1,
- Fig. 5: einen Schnitt gemäß der Linie V-V in Fig. 3,
- Fig. 6: einen Schnitt gemäß der Linie VI-VI in Fig. 4 und in
- Fig. 7: eine Detailansicht einer Entgratungsvorrichtung an der Unterseite der erfindungsgemäßen Vorrichtung.

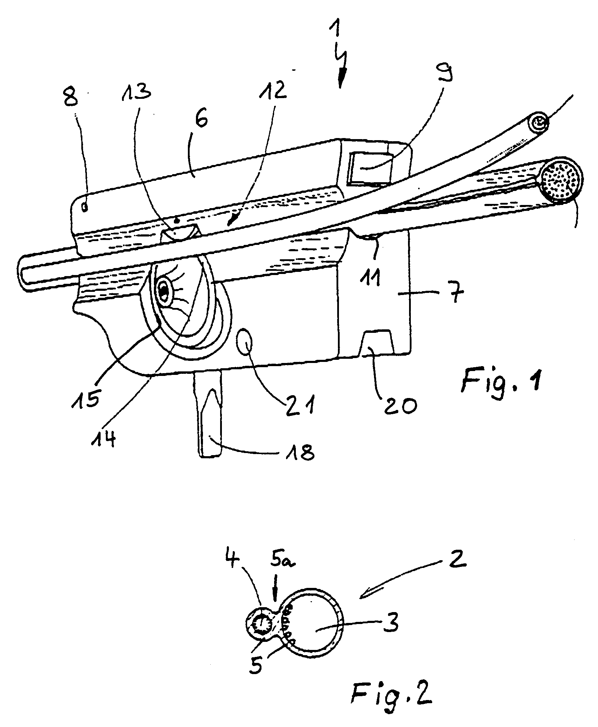

In der Zeichnung ist eine erfindungsgemäße Vorrichtung zum Trennen von Tragseilkabeln allgemein mit 1 bezeichnet. Figur 2 zeigt zunächst ein derartiges Tragseilkabel, das mit 2 bezeichnet ist. Ein solches Tragseilkabel 2 besteht aus einem z.B. elektrisch leitenden Kabel 3 oder einem Lichtwellenleiter und einem Tragseil 4, die über einen gemeinsamen Kabelmantel 5 miteinander verbunden sind. Das elektrisch leitende Kabel 3, das auch aus einer Mehrzahl von Kabeln bestehen kann, wie dies in Fig. 2 angedeutet ist, dient dabei als elektrische Verbindung, während das Tragseil 4 nur die Tragfunktion übernimmt.

Die Vorrichtung 1 zum Trennen eines solchen Tragseilkabels 2 in elektrisch leitendes Kabel 3 und Tragseil 4 durch entsprechendes Zerschneiden des Kabelmantels 5 im Bereich zwischen Kabel 3 und Tragseil 4 (in Fig. 2 mit dem Bezugszeichen 5a angedeutet) besteht aus zwei Vorrichtungselementen, einem Vorrichtungselement 6 und einem anderen Vorrichtungselement 7, wobei beide Vorrichtungselemente 6 und 7 über ein Gelenk 8 schwenkbar miteinander verbunden sind. Beide Vorrichtungselemente 6 und 7 sind in geschlossener Lage über ein Verschlußelement 9, das in der Zeichnung nur angedeutet ist, gegeneinander verrastbar.

Jedes Vorrichtungselement 6,7 weist jeweils eine Aufnahmerinne 10 bzw. 11 auf, die in geschlossener Lage eine rohrförmige Aufnahme für das Kabel 3 bzw. das Tragseil 4 des Tragseilkabels 2 bilden. In dem in der Zeichnung dargestellten Ausführungsbeispiel ist das elektrisch leitende Kabel 3 des Tragseilkabels 2 in die Aufnahmerinnen 10,11 der Vorrichtung 1 eingelegt.

Die von den beiden Aufnahmerinnen 10,11 in der geschlossenen Gebrauchslage gebildete Aufnahme ist im an das Tragseil 4 bzw. Kabel 3 angrenzenden Randbereich offen ausgebildet, dieser offene Randbereich ist mit 12 bezeichnet. Dieser offene Randbereich 12 dient zur Aufnahme des Bereiches 5a, des Kabelmantels 5 des Tragseilkabels 2.

In diesem Randbereich 12 ist im Vorrichtungselement 6 ein als drehbar gelagerte Stützrolle 13 ausgebildetes Stützglied angeordnet, während gegenüberliegend in dem Vorrichtungselement 7 ein als Schneidrad 14 ausgebildetes Schneidmesser drehbar angeordnet ist. Dabei ist das Schneidrad 14 so angeordnet, daß die umlaufende Schneidkante 15 etwa parallel zur Längsrichtung der Aufnahme orientiert ist. Das Schneidrad 14 ist auf einer Schneidradwelle 16 angeordnet, die exzentrisch in einer Lagerhülse 17 gelagert ist, wobei die Lagerhülse 17 einen kreisförmigen Außenquerschnitt aufweist und ihrerseits drehbar im Vorrichtungselement 7 angeordnet ist. An der Lagerhülse 17 ist zudem ein Schwenkhebel 18 befestigt, derart, daß durch Verschwenken dieses Schwenkhebels 18 sich die Lagerhülse entsprechend dreht, wodurch die exzentrisch gelagerte Schneidradwelle 16 in eine andere Position bewegt wird und entsprechend auch das Schneidrad 14. Durch diese Ausbildung ist es möglich, das Schneidrad 14 durch entsprechendes Verschwenken des Schwenkhebels 18 aus der oder in die Schneidebene zu bewegen.

Die Schneidradwelle 16 durchdringt das Vorrichtungselement 7 vollständig, wobei an ihrem freien, aus dem Vorrichtungselement 7 herausstehenden Ende ein Drehknebel 19 drehfest angeordnet ist. Dieser Drehknebel 19 dient zum Drehen des Schneidrades 14 zum Zertrennen des Tragseilkabels 2.

An der Unterseite des Vorrichtungselementes 7 ist eine rinnenförmige Aussparung 20 vorgesehen, in die das abgeschnittene Kabel 3 eingeführt bzw. durchgezogen werden kann. In dieser Aussparung 20 ist unter einem Winkel von 30 - 45° zur Längsrichtung derselben ein geschlitztes Rohr 21 angeordnet, dessen nach außen weisende Schnittkanten als Schneiden 22 ausgebildet sind.

Diese Anordnung aus rinnenförmiger Aussparung 20 und geschlitztem Rohr 21 kann auch als selbständige Vorrichtung ausgebildet sein, d.h. es kann ein entsprechendes rinnenförmiges Element vorgesehen sein, das der rinnenförmigen Aussparung 20 entspricht, in welchem dann das geschlitzte Rohr 21 angeordnet ist. Diese Anordnung dient zum Entgraten des mit der Vorrichtung 1 abgetrennten Kabels 3, kann aber auch zum Entgraten anderer Kabel eingesetzt werden.

Die Funktionsweise der Vorrichtung 1 ist die folgende:

Das Tragseilkabel 2 wird bei geöffneter Vorrichtung 1 mit seinem elektrisch leitenden Kabelteil 3 bzw. mit seinem Tragseil 4 (je nach den Kabelabmessungen) in die Aufnahmerinne 11 des Vorrichtungselementes 7 eingelegt. Anschließend wird die Vorrichtung geschlossen, so daß das Kabel 3 vollständig in der aus den beiden Aufnahmerinnen 10,11 gebildeten Aufnahme einliegt. Dabei ist die Vorrichtung durch das Verschlußelement 9 vollständig geschlossen. Anschliessend wird der Schwenkhebel 18 der Lagerhülse 17 verschwenkt, so daß das Schneidrad 14 in die Schneidposition bewegt wird. Dabei weist der Schwenkhebel 18 eine Arretierung auf, um während des Schneidens ein Herausschwenken der Schneidradwelle 16 mit Schneidrad 14 zu vermeiden. Durch entsprechendes Drehen am Drehknebel 19 der Schneidradwelle 16 wird das Tragseil 4 vom Kabel 3 abgeschnitten, d.h. der Kabelmantel 5 im Bereich 6 durchtrennt.

Nach der gewünschten Durchtrennung wird wiederum der Schwenkhebel 13 bewegt, so daß das Schneidrad 14 aus der Schneidposition heraus bewegt wird. Anschließend kann das durchgetrennte Tragseilkabel 2 nach Lösen der Verschlußelemente 9 und Öffnen des Vorrichtungselementes 6 entnommen werden.

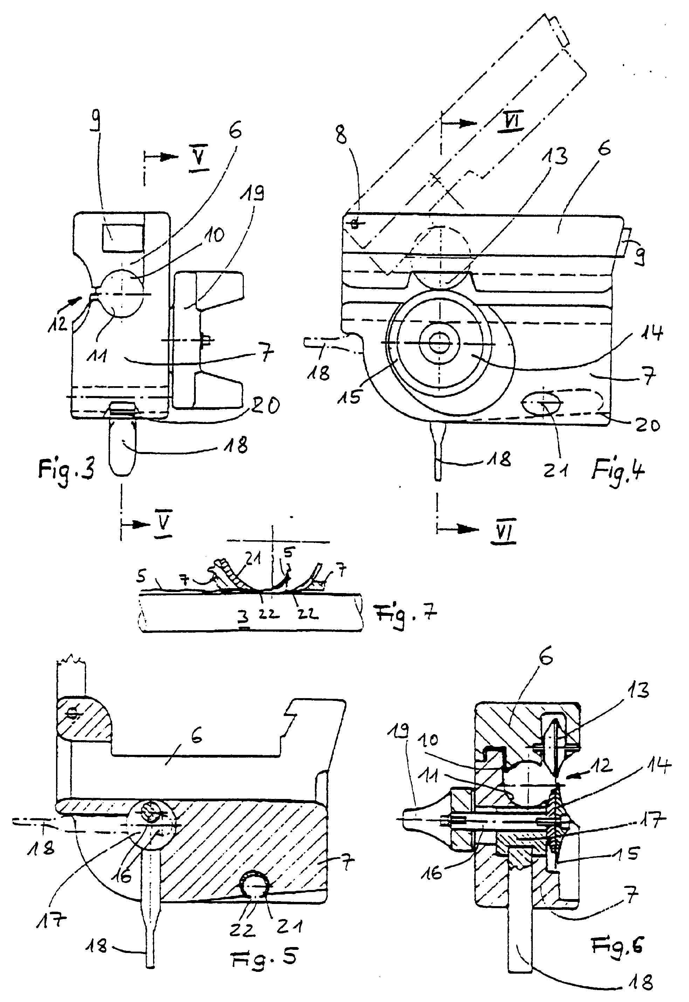

Anschließend kann der abgetrennte Kabelmantelbereich 6 des Kabels 3 noch entgratet bzw. entglättet werden, wenn dies gewünscht bzw. erforderlich ist, indem das Kabel entsprechend in Längsrichtung durch die rinnenförmige Aussparung 20 gezogen wird. Dabei ist es gleichgültig, in welcher Richtung das Durchziehen erfolgt, da zwei Schneiden 22 vorgesehen sind. Durch die Rohrform des geschlitzten Rohres 21 wird der abgetrennte Span seitlich von der Schnittstelle abgeführt und behindert nicht die Schneidarbeit (Fig. 7).

## Patentansprüche

1. Vorrichtung zum Trennen von Kabeln, die aus wenigstens zwei getrennten Kabelelementen mit gemeinsamem Kabelmantel bestehen, in die einzelnen Kabelemente mit Vorrichtungselementen (6,7) jeweils mit wenigstens einer Aufnahmerinne (10,11) für ein Kabelelement (3) oder ein anderes Kabelelement (4), wobei der in der Gebrauchslage an ein Kabelelement (4 bzw. 3) angrenzende Randbereich (12) der von den Aufnahmerinnen (10,11) gebildeten Aufnahme offen ausgebildet ist und wobei ein Element (7) im Randbereich ein Schneidrad (14) mit einer in etwa parallel zur Längsrichtung der Aufnahmerinne (11) angeordneten Schneidkante (15) und ein anderes Element (6) eine gegenüberliegend angeordnete Stützrolle (13) aufweist,
dadurch gekennzeichnet, daß die Kabelelemente (3, 4) ein leitendes, z.B elektrisch leitendes Kabel (3) und ein Tragseil (4) aufweisen, daß die Vorrichtungselemente zwei gelenkig miteinander verbundenen Elemente (6, 7) sind, daß das Schneidrad (14) derart in dem einen Element (7) gelagert ist, daß die Lage seiner Schneidradwelle (16) gegenüber der Schneidebene veränderbar ist,
daß die Schneidradwelle (16) exzentrisch in einer Lagerhülse (17) angeordnet ist, die ihrerseits drehbar in dem einen Element (7) gelagert ist und daß an der Lagerhülse (17) ein Schwenkhebel (18) angeordnet ist.

2. Vorrichtung nach Anspruch 1,
dadurch gekennzeichnet,
daß die Schneidradwelle (16) das eine Element (7) vollständig durchdringt und daß am freien Ende der Schneidradwelle (16) ein Drehknebel (19) angeordnet ist.

3. Vorrichtung nach Anspruch 1 oder 2,
dadurch gekennzeichnet,
daß die beiden Elemente (6,7) über ein Verschlußelement (9) gegeneinander verrastbar sind.

4. Vorrichtung nach Anspruch 1 oder einem der folgenden Ansprüche,
dadurch gekennzeichnet,
daß an der Unterseite des einen Vorrichtungselementes (7) eine rinnenförmige Aussparung (20) vorgesehen ist, in der schräg zu deren Längsrichtung ein in Längsrichtung geschlitztes Rohr (21) angeordnet ist, dessen beiden nach außen weisende Schnittkanten als Schneiden (22) ausgebildet sind.

5. Vorrichtung nach Anspruch 4,
dadurch gekennzeichnet,
daß das geschlitzte Rohr (21) unter einem Winkel von 30 - 45° zur Längsrichtung der rinnenförmigen Aussparung (20) angeordnet ist.

6. Vorrichtung nach Anspruch 1 oder einem der folgenden Ansprüche, dadurch gekennzeichnet, daß, zum Entgraten von Kabelmanteloberflächen ein in Längsrichtung geschlitztes Rohr (21) vorgesehen ist, dessen beide Schnittkanten als Schneiden (22) ausgebildet sind, wobei das Rohr in einem getrennten rinnenförmigen Element (20), schräg zu dessen Längsrichtung angeordnet ist.

7. Vorrichtung nach Anspruch 6,
dadurch gekennzeichnet,
daß das geschlitzte Rohr (21) unter einem Winkel von 30 - 45° zur Längsrichtung des rinnenförmigen Elementes (20) angeordnet ist.

## Claims

1. Apparatus for separating cables which comprise at least two separate cable elements with a common cable sheath into the individual cable elements, comprising apparatus elements (6, 7) each having at least one receiving channel (10, 11) for one cable element (3) or another cable element (4), wherein the edge region (12), which in the position of use adjoins one cable element (4 or 3 respectively), of the receiving means formed by the receiving channels (10, 11), is of an open configuration, and wherein one element (7) has in the edge region a cutting wheel (14) with a cutting edge (15) arranged substantially parallel to the longitudinal direction of the receiving channel (11), and another element (6) has an oppositely disposed support roller (13), characterised in that the cable elements (3, 4) have a conductive, for example electrically conductive cable (3) and a carrier line (4), that the apparatus elements are two pivotably interconnected elements (6, 7), that the cutting wheel (14) is mounted in the one element (7) in such a way that the position of its cutting wheel shaft (16) is variable relative to the cutting plane, that the cutting wheel shaft (16) is arranged eccentrically in a mounting bush (17) which in turn is mounted rotatably in the one element (7) and that a pivotal lever (18) is arranged on the mounting bush (17).

2. Apparatus according to claim 1 characterised in that the cutting wheel shaft (16) passes completely through the one element (7) and that a rotary toggle handle (19) is arranged at the free end of the cutting wheel shaft (16).

3. Apparatus according to claim 1 or claim 2 characterised in that the two elements (6, 7) can be latched together by way of a closure element (9).

4. Apparatus according to claim 1 or one of the following claims characterised in that disposed at the underside of the one apparatus element (7) is a channel-shaped recess (20) in which a tube (21) which is slit in the longitudinal direction is disposed inclinedly relative to the longitudinal direction of the recess, the two outwardly facing cut edges of the tube being in the form of cutting edges (22).

5. Apparatus according to claim 4 characterised in that the slit tube (21) is arranged at an angle of 30 to 45° relative to the longitudinal direction of the channel-shaped recess (20).

6. Apparatus according to claim 1 or one of the following claims characterised in that for trimming cable sheath surfaces there is provided a tube (21) which is slit in the longitudinal direction and the two cut edges of which are in the form of cutting edges (22), wherein the tube is arranged in a separate channel-shaped element (20) inclinedly relative to the longitudinal direction thereof.

7. Apparatus according to claim 6 characterised in that the slit tube (21) is arranged at an angle of 30 to 45° relative to the longitudinal direction of the channel-shaped element (20).

## Revendications

1. Dispositif pour la séparation des câbles, qui consistent au moins en deux éléments de câbles séparés avec une enveloppe de câbles commune, en les différents éléments de câbles avec des éléments du dispositif (6, 7) respectivement avec au moins une goulotte de réception (10,11) pour un élément de câble (3) ou un autre élément de câble (4), moyennant quoi la zone marginale (12) limitrophe dans la position d'utilisation d'un élément de câble (4 ou 3) du logement formé par les goulottes de réception (10,11) est conçue de façon ouverte et moyennant quoi un élément (7) présente dans la zone marginale un couteau circulaire (14) avec une arête de coupe (15) disposée sensiblement de façon parallèle à la direction longitudinale de la goulotte de réception (11) et un autre élément (6) présente un rouleau d'appui (13) disposé en regard, caractérisé en ce que les éléments de câble (3,4) présentent un câble conducteur, par exemple électriquement conducteur (3) et un câble porteur (4), en ce que le couteau circulaire (14) est placé de telle sorte dans l'un des éléments (7) que la position de son arbre de couteau circulaire (16) est variable par rapport au plan de coupe, en ce que les éléments de coupe sont deux éléments (6, 7) raccordés de façon articulaire entre eux, en ce que l'arbre du couteau circulaire (16) est agencé excentriquement dans une douille de palier qui de son côté est logée de façon rotative dans l'un des éléments (7) et en ce qu'un levier basculant (18) est monté sur la douille de palier (17).

2. Dispositif selon la revendication 1, caractérisé en ce que l'arbre du couteau circulaire (16) traverse complètement l'un des éléments (7) et en ce qu'une poignée rotative (19) est agencée sur l'extrémité libre de l'arbre du couteau circulaire (16).

3. Dispositif selon la revendication 1 ou 2, caractérisé en ce que les deux éléments sont encliquetables l'un par rapport à l'autre par le biais d'un élément de fermeture (9).

4. Dispositif selon la revendication 1 ou l'une des revendications suivantes, caractérisé en ce que sur le côté inférieur de l'un des éléments du dispositif (7) est prévu un évidement en forme de goulotte (2) dans lequel est agencé obliquement par rapport à sa direction longitudinale un tube fendu dans la direction longitudinale (21) dont les deux bords de coupe dirigés vers l'extérieur sont conçus sous forme de lame (22).

5. Dispositif selon la revendication 4, caractérisé en ce que le tube fendu (21) est agencé selon un angle de (30, 45°) par rapport à la direction longitudinale de l'évidement en forme de goulotte (20).

6. Dispositif selon la revendication 1 ou l'une des revendications suivantes, caractérisé en ce que pour l'ébavurage des surfaces de l'enveloppe de câbles, il est prévu un tube fendu dans la direction longitudinale (21) dont les deux bords de coupe sont conçus sous forme de lame (22), moyennant quoi le tube est disposé dans un élément séparé en forme de goulotte (20), obliquement par rapport à sa direction longitudinale.

7. Dispositif selon la revendication 6, caractérisé en ce que le tube fendu (21) est disposé selon un angle de 30 - 45° par rapport à la direction longitudinale de l'élément en forme de goulotte (20).
